# EUROPÄISCHE PATENTANMELDUNG

(11) **EP 2 085 564 A2**
(43) Veröffentlichungstag der Anmeldung: **05.08.2009**
(21) Anmeldenummer: 09001269.1
(22) Anmeldetag: 30.01.2009
(51) Int. Cl.: E06B 9/68, E06B 9/80

(54) **Antriebsvorrichtung mit einer Rutschkupplung oder Bremse**

(30) Priorität: 30.01.2008 DE 102008006805
(71) Anmelder: Gerhard Geiger GmbH & Co., 74321 Bietigheim-Bissingen (DE)
(72) Erfinder: Dangel, Hans-Michael, 74391 Erligheim (DE)
(74) Vertreter: Jeck, Anton

(57) **Zusammenfassung**

Die Erfindung betrifft eine Antriebsvorrichtung (1.1-1.4) aus einer Antriebseinheit (2,8) und einer Abtriebseineinheit (6,9), die beide mittels einer doppelseitig wirkenden Rutschkupplung (1,2) verbindbar sind, wobei die in beiden Drehrichtungen wirkenden Freigabemomente wählbar sind, insbesondere für den Antrieb einer Wickelwelle eines Rollladens, einer Markise, einer Jalousie oder dergleichen, vorzugsweise bei Dachfenstern. Um Falscheinwirkungen auf die Wickelwelle zu vermeiden, die beispielsweise bei schrägen Dachfenstern beim Öffnen und Schließen des Dachfensters entstehen, ist die Rutschkupplung (1,2) für jede Drehrichtung mit mindestens einer als Schleppfeder arbeitenden Schraubenfeder (3-5) ausgebildet, deren Freigabemoment derart bemessen ist, dass ein Falscheinwirkungen verhinderndes Auslösemoment erzeugt wird.

## Beschreibung

Die Erfindung betrifft eine Antriebsvorrichtung mit einer Rutschkupplung oder Bremse nach dem Oberbegriff des Anspruchs 1.

Eine solche Vorrichtung für eine Rutschkupplung wird vorzugsweise abtriebsseitig am Antrieb und antriebsseitig an der Wickelwelle einer Markise, Rollladen, Jalousie oder dergleichen eingesetzt.

Durch die DE 20 102 734, DE 3 726 715, DE 4 107 611, EP 0 813 646, EP 1 686 231 und WO 9 925 946 sind Vorrichtungen für eine Rutschkupplung für eine Jalousie offenbart, wobei die Rutschkupplung mit einer Schraubenfeder arbeitet, die bei einem bestimmten Drehmoment öffnet und damit als Überlastschutz zur Vermeidung von Schäden an der Jalousie dient.

Durch die DE 4 107 611 und EP 0 503 161 sind Vorrichtungen für eine Rutschkupplung bei Rollläden, insbesondere für Dachfenster, bekannt, wobei die Rutschkupplung aus zwei Teilkupplungen besteht, die in zwei entgegengesetzten Drehrichtungen wirken. Dabei können die Teilkupplungen Freigabemomente aufweisen, die für beide Drehrichtungen unterschiedlich ausgebildet sind. Die Teilkupplungen arbeiten jeweils mit einem als Hohlrad ausgebildeten Zahnrad, dem jeweils mindestens ein zentrisch dazu angeordnetes Federelement zugeordnet ist, das als Blechstreifen ausgebildet ist. Auch bei diesen Vorrichtungen sind die Freigabemomente derart gewählt, dass die Rutschkupplung in beiden Drehrichtungen als Überlastungsschutz dient.

Im Gegensatz dazu tritt insbesondere bei herkömmlichen Dachfensterrollläden noch folgendes Problem auf. Wenn das Dachfenster sich in geschlossener Stellung befindet und der Rollladen vollkommen ausgefahren ist, bewegt sich der Rollladen beim Öffnen des Dachfensters zur Wickelwelle hin. Der Rollladen wird dadurch in eine ungünstige Lage gedrängt, so dass ein Verklemmen des Rollladens erfolgen kann. Wenn umgekehrt das Dachfenster vollkommen geöffnet ist und der Rollladen sich in vollkommen eingefahrener Stellung befindet, kann sich die Rollladenwickelwelle ungewollt zurück, also in Richtung des Rollladenschließens hin, bewegen, so dass der Rollladen durch zu hohe Zugkräfte beschädigt werden kann. Diese beiden Betriebsfälle bedeuten, dass eine Falscheinwirkung auf den Behang bzw. die Wickelwelle des Behangs in zwei Richtungen, also Einfahrrichtung und Ausfahrrichtung, erfolgt.

Die Aufgabe der Erfindung besteht darin, bei einer Vorrichtung der im Oberbegriff des Anspruchs 1 genannten Art diese erläuterte Falscheinwirkung zu vermeiden.

Diese Aufgabe wird mit den Merkmalen des Anspruchs 1 gelöst.

Gemäß einer weiteren Ausbildung der Erfindung üben die in beiden Drehrichtungen wirkenden Schraubenfedern unterschiedlich große Bremsmomente aus. Damit erfolgt eine Anpassung an die auf die Antriebsvorrichtung einwirkenden Kräfte. Gemäß einer weiteren Ausbildung der Erfindung sind mehrere Schraubenfedern für eine Drehrichtung oder für beide Drehrichtungen vorgesehen. Damit kann die erforderliche Bremskraft mit Schraubenfedern gleichen oder unterschiedlichen Typs einfach eingestellt werden.

Weitere Ausbildungen der Erfindung beziehen sich auf Antriebsvorrichtungen, bei denen ein Rohrmitnehmer in eine Wickelwelle ragt. Bei diesen Ausbildungen kann die Rutschkupplung im Rohrmitnehmer integriert oder mit dem Rohrmitnehmer gekoppelt sein.

Grundsätzlich kann die beanspruchte Rutschkupplung auch in einem Getriebe angewendet werden, wobei die Antriebseinheit eine angetriebene Welle und die Abtriebseinheit eine Schnecke ist. Ein weiterer Anwendungsfall wäre eine in einem Gestänge untergebrachte Rutschkupplung, wobei ein Schaft mit einem Gestängerohr über die Schraubenfedern koppelbar ist, deren Federenden im Gestängerohr befestigt sind. Ferner kann die Erfindung bei einer Bremse angewendet werden, die einen durchgängigen Antrieb aus einer Schnecke aufweist, auf deren Welle die Schraubenfedern angeordnet sind, deren Enden in einem Steuergehäuse befestigt sind.

Die Erfindung wird nun anhand von Ausführungsbeispielen näher erläutert. Es zeigen:
- Fig. 1: eine perspektivische Explosionsansicht einer Antriebsvorrichtung für die Wickelwelle eines Rollladens gemäß der Erfindung,
- Fig. 2: die Antriebsvorrichtung der Fig. 1 aus einer rückwärtigen, perspektivi- schen Ansicht,
- Fig. 3: eine perspektivische Ansicht der bei der Antriebsvorrichtung der Fig. 1 verwendeten Antriebseinheit,
- Fig. 4: eine Stirnansicht der Antriebseinheit der Fig. 3,
- Fig. 5: eine Seitenansicht der Antriebseinheit der Fig. 3,
- Fig. 6: eine perspektivische Ansicht der bei der Antriebsvorrichtung der Fig. 1 verwendeten Schleppfeder,
- Fig. 7: eine Stirnansicht der Abtriebseinheit der Fig. 6,
- Fig. 8: eine Seitenansicht der Schleppfeder der Fig. 6,
- Fig. 9: eine perspektivische Ansicht der bei der Antriebsvorrichtung der Fig. 1 verwendeten Abtriebseinheit,
- Fig. 10: eine Stirnansicht der Abtriebseinheit der Fig. 9,
- Fig. 11: eine Seitenansicht der Abtriebseinheit der Fig. 9,
- Fig. 12: ein vergrößerter Schnitt durch die Abtriebseinheit der Fig. 10,
- Fig. 13: eine perspektivische Explosionsansicht einer zweiten Ausführung einer Antriebsvorrichtung gemäß der Erfindung, und zwar für ein Schnecken- getriebe,
- Fig. 14: eine perspektivische Ansicht der zusammengesetzten Antriebsvorrich- tung der Fig. 13,
- Fig. 15: eine perspektivische Explosionsansicht einer dritten Ausführung einer Antriebsvorrichtung gemäß der Erfindung, und zwar für eine Bremse, und
- Fig. 16: eine Komplettzeichnung der Bremse ohne Gehäuse

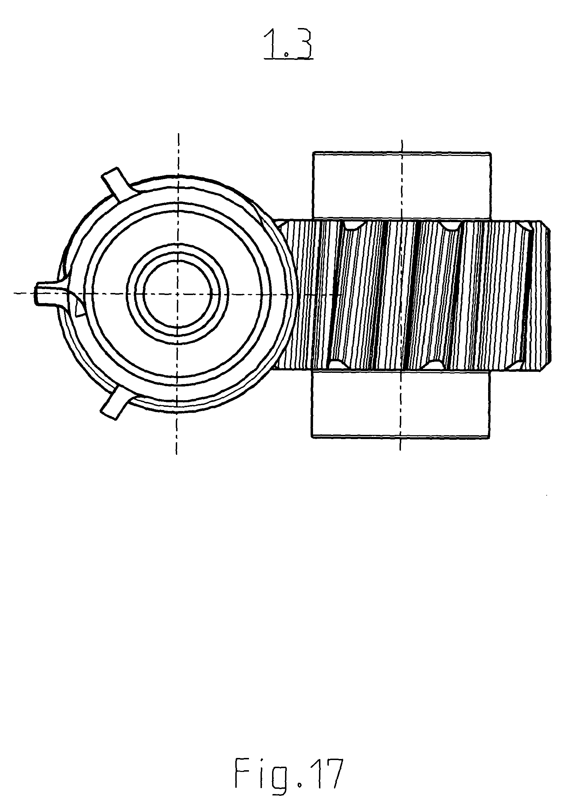

- Fig. 17: eine perspektivische Ansicht der Bremse ohne Gehäuse

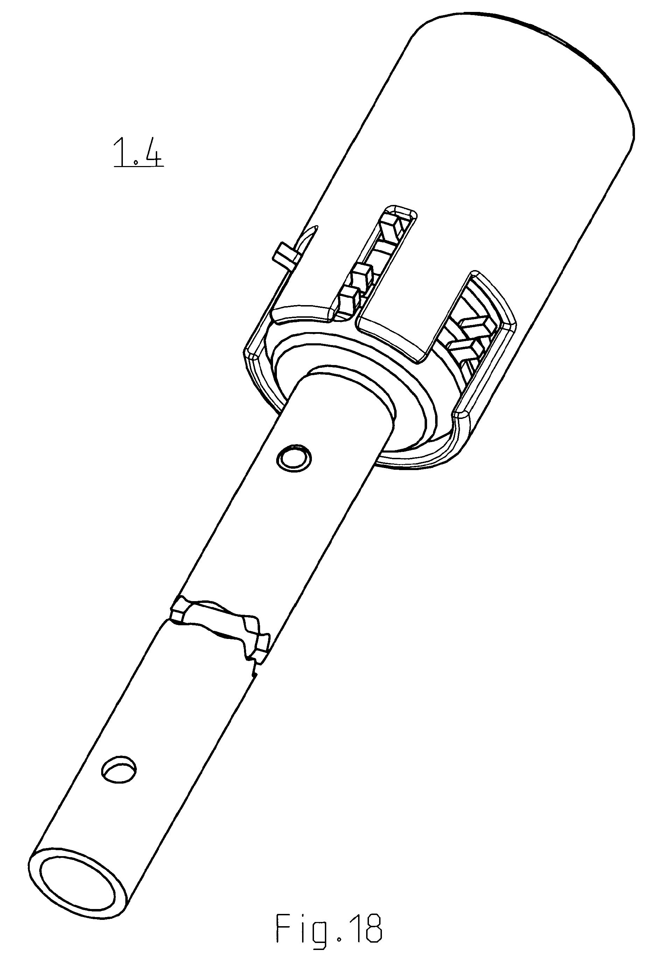

- Fig. 18: eine perspektivische Ansicht einer vierten Ausführung einer Antriebs- vorrichtung gemäß der Erfindung, und zwar für ein Gestänge.

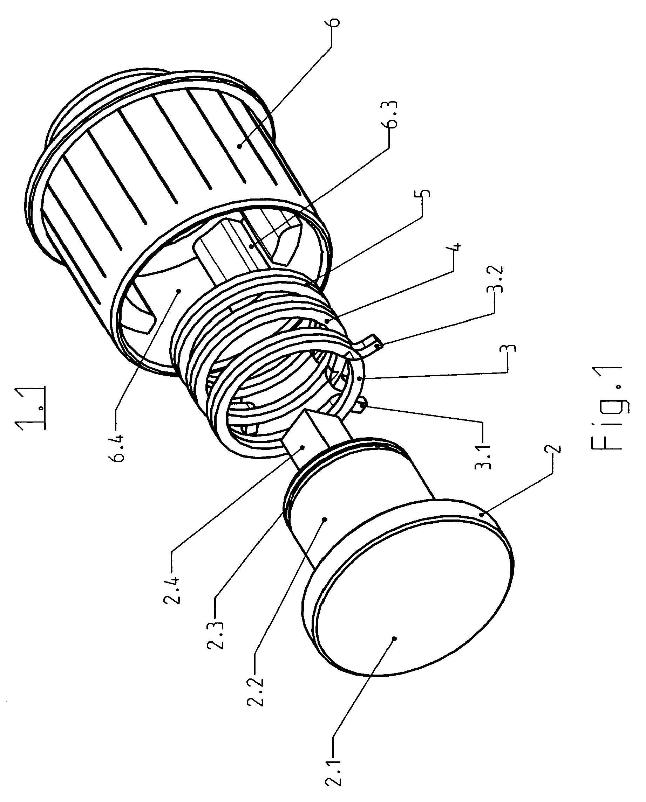

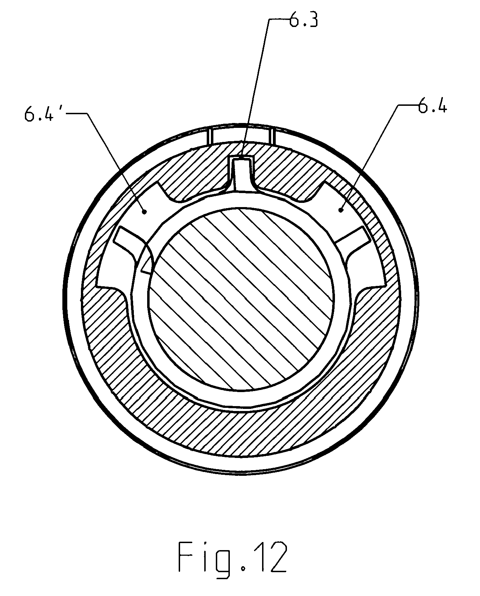

Eine erste Ausführung einer Antriebsvorrichtung 1.1 für die Wickelwelle eines Rolladens, einer Jalousie oder einer Markise ist in den Figuren 1 bis 12 dargestellt.

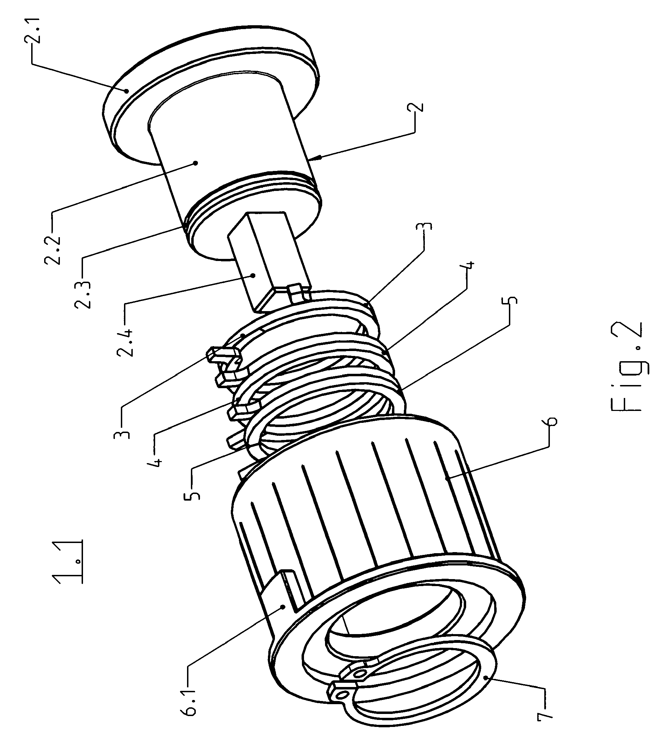

In den Figuren 1 und 2 besteht die Antriebsvorrichtung 1.1 aus einer Antriebseinheit, die als Mitnehmerwelle 2 ausgebildet ist, drei als Schleppfedern wirkende Schraubenfedern 3, 4 und 5, einer Abtriebseinheit, die als Rohrmitnehmer 6 ausgebildet ist, und einem Sicherungsring 7.

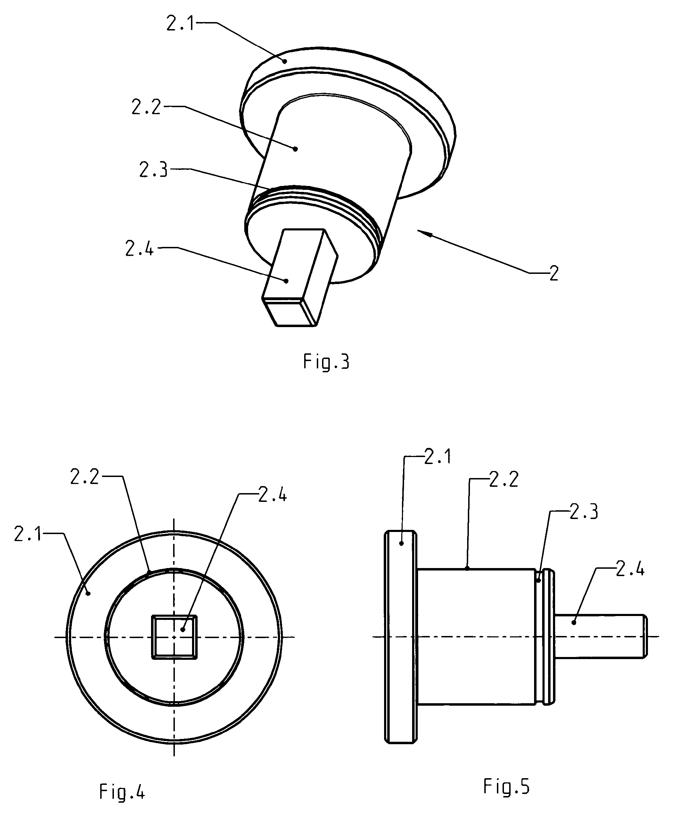

Die Mitnehmerwelle 2 umfasst (s. auch die Figuren 3-5) nacheinander eine Scheibe 2.1, einen Schaft 2.2, eine am Ende des Schafts 2.2 angeordnete Ringnut 2.3 und ein Vierkantstück 2.4. Die Mitnehmerwelle 2 kann in nicht dargestellter Weise mit einer Handkurbel oder einem Motor verbunden sein.

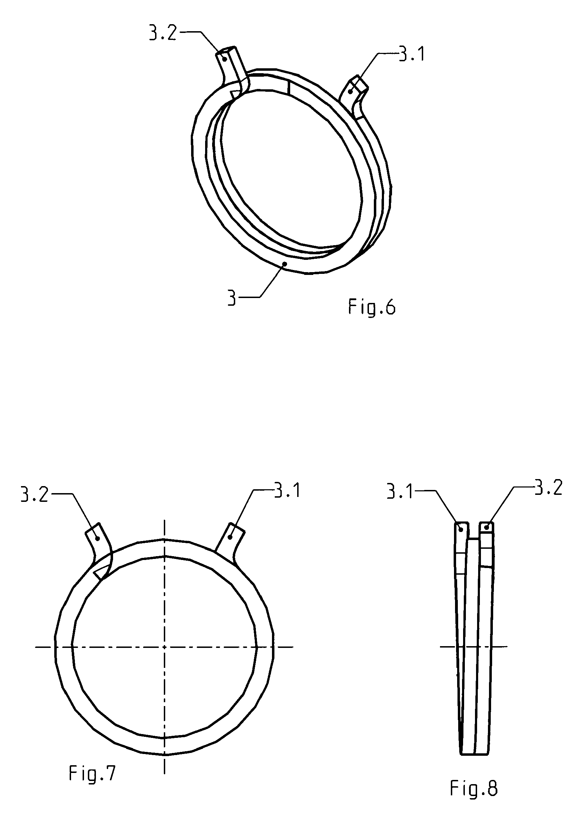

Jede Schraubenfeder 3-5 (s. auch die Figuren 6-8) umfasst fast zwei Windungen und trägt an ihren Enden abgebogene Endstücke, wie die Endstücke 3.1 und 3.2 der Schraubenfeder 3. Die Schraubenfedern - 4 +5 besitzen die gleiche Einbaulage, während die Schraubenfeder 3 180° um das Federende 3.1 gewendet montiert ist.Die Schraubenfedern 3-5 werden vorzugsweise unter Vorspannung auf den Schaft 2.2 aufgeschoben, wobei sie die Umfangsfläche des Schafts 2.2 berühren.

Des Weiteren kann jede Schraubenfeder mit unterschiedlichen Windungen / Wicklungssinn und / oder nur mit einem abgebogenem Endstück wie die Endstücke 3.1 und 3.2 ausgestaltet sein.

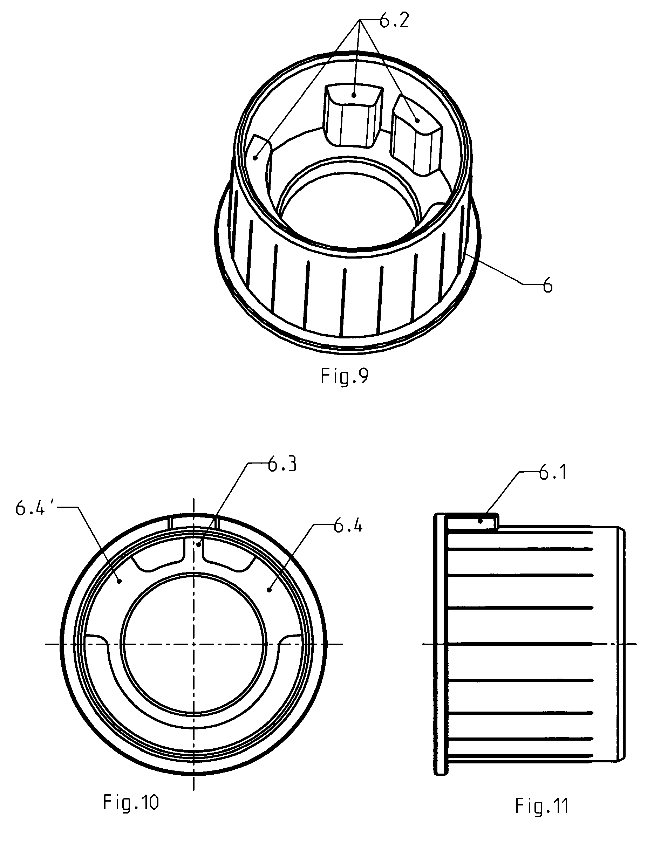

Der Rohrmitnehmer 6 (s. auch die Figuren 9-12) ist am Außenumfang mit einem Arretierstück 6.1 versehen, das beim Einstecken des Rohrmitnehmers in einer nicht dargestellten Wickelwelle für den Behang eingreift, so dass der Rohrmitnehmer 6 mit der Wickelwelle radial verbunden ist. Der Rohrmitnehmer 6 weist an seinem Innenumfang mehrere kreisstückförmige Vorsprünge 6.2 auf, durch die Nuten 6.3, 6.4 und 6.4' gebildet werden. In diese Nuten greifen die Endstücke (beispielsweise 3.1, 3.2) der Schraubenfedern 3-5 ein. Die Schraubenfedern 3-5 bremsen in der einen Drehrichtung und rutschen durch, nachdem ein erstes Drehmoment X überwunden ist. Dieses Moment X entsteht aus der Summe der Schließmomente der Federn 4+5 plus des Öffnungsmomentes der Feder 3. Bei Betätigung in die andere Richtung bremsen die Schraubfedern 3-5 und rutschen durch, nachdem ein zweites Drehmoment Y überwunden ist.

Dieses Moment Y entsteht aus der Summe der Öffnungsmomente der Federn4+5 plus des Schließmomentes der Feder 3.Das erste Drehmoment und das zweite Drehmoment können unterschiedlich bemessen sein.

Die Mitnehmerwelle 2 wird im Rohrmitnehmer 6 durch den Sicherungsring 7 gesichert, der in die Ringnut 2.3 eingreift.

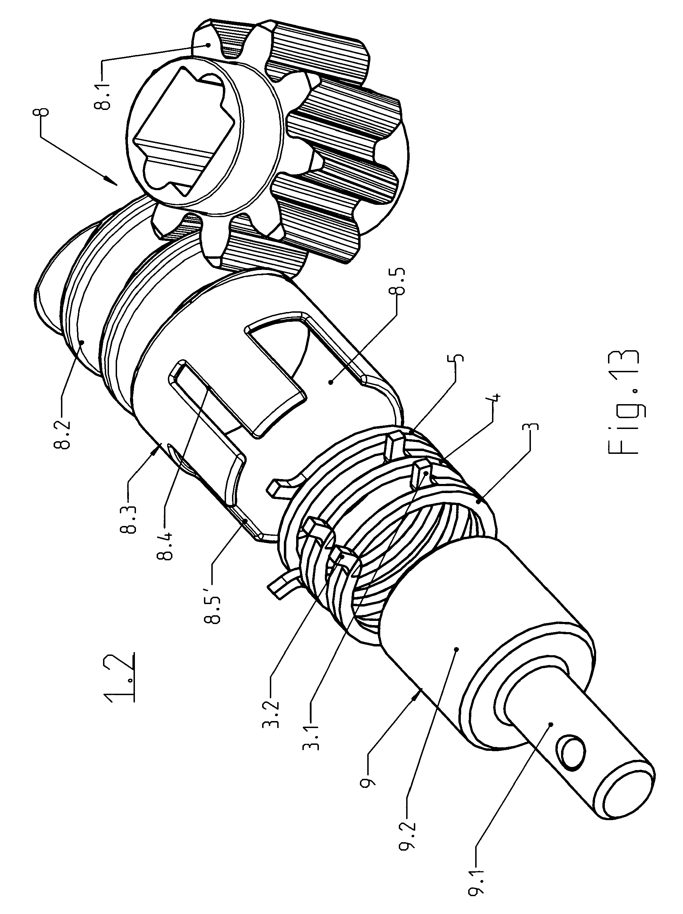

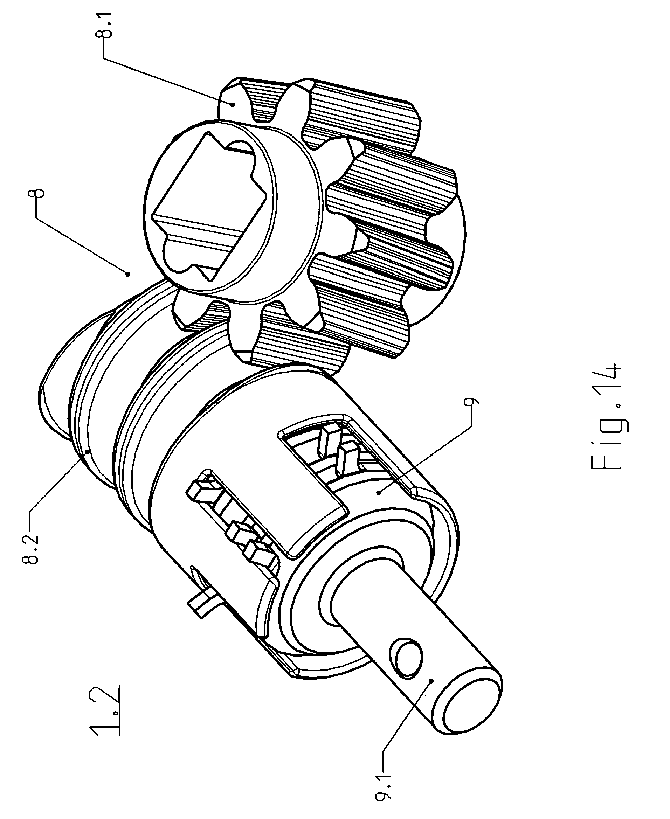

Ein zweites Ausführungsbeispiel für die Antriebsvorrichtung 1.2 ist in den Figuren 13, 14 dargestellt. Hier ist die Antriebsvorrichtung 1.2 aus einer Antriebseinheit 8 in Form eines Schneckengetriebes, das aus einem Zahnrad 8.1, einer Schnecke 8.2, in die das Zahnrad 8.1 eingreift, und einem mit der Schnecke 8.2 verbundenen Rohrgehäuse 8.3 besteht, aus drei als Schleppfedern wirkende Schraubenfedern 3, 4 und 5 sowie aus einer Abtriebseinheit 9 gebildet, die eine Abtriebswelle 9.1 und einen mit dieser verbundenen Zylinder 9.2 umfasst. Die Schraubenfedern 3-5 werden vorzugsweise unter Vorspannung auf den Schaft 9.2 aufgeschoben, wobei sie die Umfangsfläche des Schafts 9.2 berühren.

Die Ausbildung und Bemessung der Schraubenfedern entsprechen dem ersten Ausführungsbeispiel.

Das Rohrgehäuse 8.3 weist nach außen offene, achsparallele Schlitze 8.4, 8.5 und 8.5' auf, in die wieder die Endstücke (beispielsweise 3.1, 3.2 der Schraubenfedern 3-5) eingreifen.

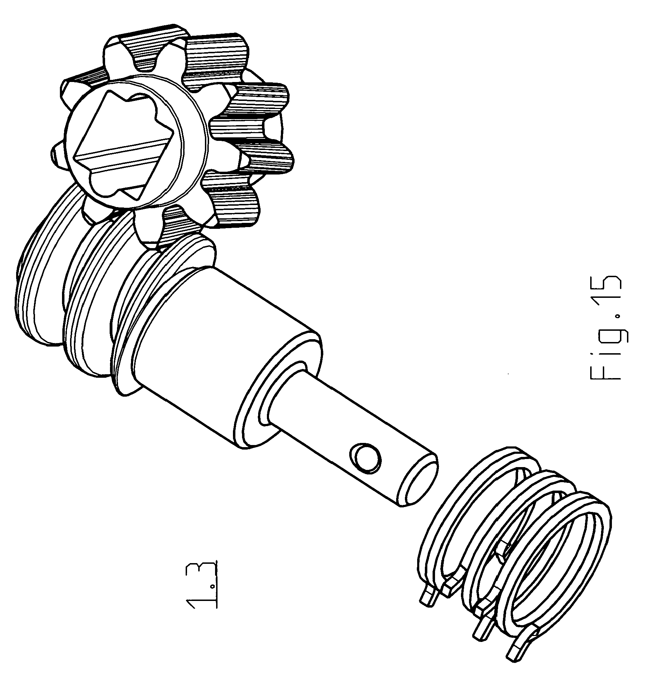

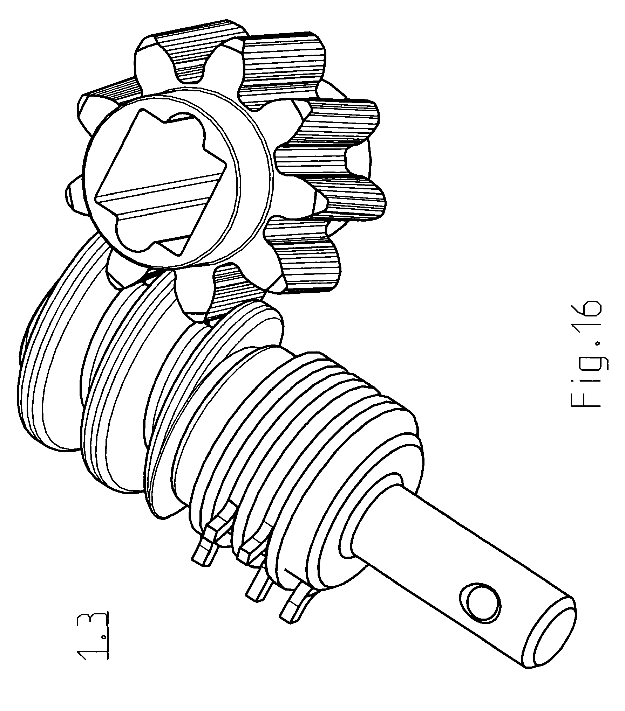

In den Figuren 15 und 16 sind ein ähnliches drittes Ausführungsbeispiel für eine Antriebsvorrichtung Bremse und ein ähnliches viertes Ausführungsbeispiel für ein Gestänge dargestellt.

## Patentansprüche

1. Antriebsvorrichtung (1.1-1.4) aus einer Antriebseinheit (2, 8) und einer Abtriebseineinheit (6, 9), die beide mittels einer doppelseitig wirkenden Rutschkupplung (1, 2) verbindbar sind, wobei die in beiden Drehrichtungen wirkenden Freigabemomente wählbar sind, insbesondere für den Antrieb einer Wickelwelle eines Rollladens, einer Markise, einer Jalousie oder dergleichen, vorzugsweise bei Dachfenstern,
**dadurch gekennzeichnet,**
**dass** die Rutschkupplung (1, 2) für jede Drehrichtung mit mindestens einer als Schleppfeder arbeitenden Schraubenfeder (3-5) ausgebildet ist, deren Freigabemoment derart bemessen ist, dass ein Falscheinwirkungen verhinderndes Auslösemoment erzeugt wird.

2. Antriebsvorrichtung nach Anspruch 1,
**dadurch gekennzeichnet,**
**dass** die in beiden Drehrichtungen wirkenden Schraubenfedern (3, 4; 5) unterschiedlich große Bremsmomente ausüben.

3. Antriebsvorrichtung nach Anspruch 1,
**dadurch gekennzeichnet,**
**dass** mehrere Schraubenfedern (3-5) für eine Drehrichtung oder für beide Drehrichtungen vorgesehen sind.

4. Antriebsvorrichtung nach einem der Ansprüche 1 bis 3, für Wickelwellen, in die ein Rohrmitnehmer (6) ragt,
**dadurch gekennzeichnet,**
**dass** die Rutschkupplung (1, 2) im Rohrmitnehmer (6) integriert ist.

5. Antriebsvorrichtung nach einem der Ansprüche 1 bis 3, für Wickelwellen, in die ein Rohrmitnehmer (6) ragt,
**dadurch gekennzeichnet,**
**dass** die Rutschkupplung (1, 2) mit dem Rohrmitnehmer (6) gekoppelt ist.

6. Antriebsvorrichtung, nach einem der vorherigen Ansprüche,
**dadurch gekennzeichnet,**
**dass** auf die abgebogenen Endstücke der Federn (3-5) teilweise verzichtet werden kann.
